# EUROPÄISCHE PATENTSCHRIFT

(11) **EP 2 657 565 B1**
(45) Veröffentlichungstag und Bekanntmachung des Hinweises auf die Patenterteilung: **19.03.2014**
(21) Anmeldenummer: 13002035.7
(22) Anmeldetag: 18.04.2013
(51) Int. Cl.: F16F 9/42, F16F 9/32

(54) **Schwingungsdämpfer für ein Fahrzeug**
Vibration damper for a vehicle
Amortisseur de vibrations pour véhicule

(30) Priorität: 28.04.2012 DE 102012009222
(43) Veröffentlichungstag der Anmeldung: 30.10.2013
(73) Patentinhaber: AUDI AG, 85045 Ingolstadt (DE)
(72) Erfinder: Willems, Marco, DE - 85053 Ingolstadt (DE)

(56) Entgegenhaltungen:
- EP-A1- 0 027 163
- DE-A1- 19 723 795
- DE-A1-102007 015 867
- DE-A1-102009 031 700
- DE-C1- 3 901 526
- US-A- 4 738 339
- US-A- 4 749 071

## Beschreibung

Die vorliegende Erfindung betrifft einen Schwingungsdämpfer für ein Fahrzeug, umfassend einen Zylinder, in dem ein Dämpfungskolben mit Dämpfungsventilen und einer Kolbenstange axial verschiebbar angeordnet ist, wobei der Zylinder ein Innenrohr aus einem Metall und ein das Innenrohr zumindest teilweise umgebendes Aussenrohr aus einem Kunststoff aufweist.

Derartige Schwingungsdämpfer werden insbesondere im Fahrzeugbau zum dämpfen der Schwingungen der gefederten Massen eines Fahrwerks verwendet. Dies geschieht durch eine Umwandlung der Schwingungsenergie in Wärme, die dann an die Umgebung abgegeben wird. Zur Reduzierung des Gewichts können mit Kunststoffen verstärkte Zylinder zum Einsatz kommen, wobei deren isolierende Eigenschaften die Wärmeabfuhr aus dem Zylinder beeinträchtigen.

Die gattungsbildende DE 10 2009 031 700 A1 beschreibt ein Gehäuse eines Stoßdämpfers im Fahrwerk eines Fahrzeugs, das einen Zylinder zur Führung eines Kolbens bildet und dessen Zylinderwand zumindest anteilig aus einem Kunststoffmaterial besteht. Hierzu wird unter anderem ein zylindrisches Innenrohr aus Metall mit dem Kunststoffmaterial umgeben. Es können im Kunststoffmaterial Metallelemente zu unterschiedlichen Zwecken, beispielsweise zur Wärmeabfuhr, vorgesehen sein. Als Nachteil ist zu nennen, dass das Gehäuse trotz der eingearbeiteten Metallelemente keine ideale Wärmeabfuhr gewährleisten kann, weil der Übergang vom Innenrohr auf die Metallelemente gestört ist, und die Herstellung der Wärmebrücke insgesamt zu aufwändig ist.

Aufgabe der vorliegenden Erfindung ist es daher einen leicht bauenden Schwingungsdämpfer für ein Fahrzeug bereitzustellen, der einfach herzustellen ist und eine verbesserte Wärmeabfuhr bietet.

Diese Aufgabe wird durch die Merkmale des Patentanspruchs 1 gelöst.

Ein Fahrzeug mit mindestens einem erfindungsgemäßen Schwingungsdämpfer ist in Patentanspruch 8 beansprucht.

Ein Schwingungsdämpfer für ein Fahrzeug umfasst einen Zylinder, in dem ein Dämpfungskolben mit Dämpfungsventilen und einer Kolbenstange axial verschiebbar angeordnet ist, wobei der Zylinder ein Innenrohr aus einem Metall und ein das Innenrohr zumindest teilweise umgebendes Aussenrohr aus einem Kunststoff aufweist und wobei das Innenrohr in einem Abschnitt eine umfangsseitig dickere Wandung aufweist und das Aussenrohr in diesem Abschnitt das Innenrohr zumindest nicht vollständig umgibt.

Indem das Innenrohr einen Abschnitt aufweist, der eine umfangsseitig verdickte Wandung aufweist, die zumindest nicht vollständig von dem Aussenrohr überlagert ist, kann über diese Wärmebrücke eine sehr effiziente Abfuhr von Wärme aus dem Innern des Zylinders an die Umgebung erfolgen. Der einteilige Aufbau behindert den Wärmeübergang nicht und die abschnittsweise fehlende Überlagerung durch das Aussenrohr kann in der Herstellung sehr einfach dargestellt werden. Somit werden die Vorteile einer leichten Hybridbauweise, mit einem Innenrohr aus einem Metall und einem Aussenrohr aus einem Kunststoff, und einer betriebssicheren Wärmeabfuhr kombiniert. Der Schwingungsdämpfer kann sowohl als Einrohrdämpfer oder als Zweirohrdämpfer ausgeführt sein. Zudem kann das Innenrohr neben einer zylindrisch runden Form selbstverständlich auch elliptisch, eckig oder mit einem anderen beliebigen Querschnitt ausgebildet sein.

In einer bevorzugten Ausführung ist die Wandung in dem Abschnitt radial umlaufend dicker. Eine radial umlaufend verdickte Wandung ist besonders einfach herzustellen, da das Innenrohr dadurch rotationssymmetrisch ist.

In einer bevorzugten Ausführung kongruiert der dickere Abschnitt mit einem Abschnitt hoher thermischer Belastung in dem Zylinder und/oder hoher Luftströmung um den Zylinder. Indem der verdickte Abschnitt dort angeordnet ist, wo die meiste Wärme beim Betrieb des Schwingungsdämpfers entsteht und/oder die beste Wärmeabfuhr durch die den Zylinder umströmende Aussenluft vorliegt, erfolgt eine besonders effiziente Wärmeabfuhr.

In einer bevorzugten Ausführung ist der Kunststoff nur um eine Mantelfläche des Innenrohrs herum angeordnet. Die Deckfläche und die Grundfläche des von dem Innenrohr gebildeten Zylinders werden von dem Aussenrohr somit nicht überlagert. Der Kunststoff des Aussenrohrs wird dadurch in erster Linie in Zug- und Druckrichtung mit Kräften beaufschlagt.

In einer bevorzugten Ausführung ist der Kunststoff als ein Faserverbundwerkstoff ausgebildet. Dazu zählen unter anderem Glasfaserverbundwerkstoffe oder Kohlefaserverbundwerkstoffe. Diese vereinen geringes Gewicht mit vorteilhaften Festigkeitseigenschaften.

In einer bevorzugten Ausführung ist der Innenzylinder mit dem Faserverbundwerkstoff teilweise umwickelt. Die teilweise Umwicklung des Innenzylinders mit Bahnen aus Faserverbundwerkstoff erlauben eine einfache und kostengünstige Herstellung des Schwingungsdämpfers. Der verdickte Abschnitt des Innenrohrs kann dadurch gezielt vom Auftrag mit Faserverbundwerkstoff ausgespart werden.

In einer bevorzugten Ausführung ist das Metall als eine Eisen-Knetlegierung ausgebildet. Als Eisen-Knetlegierung sind Stahlwerkstoffe verschiedener Güten zu verstehen. Durch das stabile Innenrohr kann dieses im Vergleich zum Aussenrohr - mit Ausnahme des verdickten Abschnitts - wesentlich dünnwandiger ausgebildet werden.

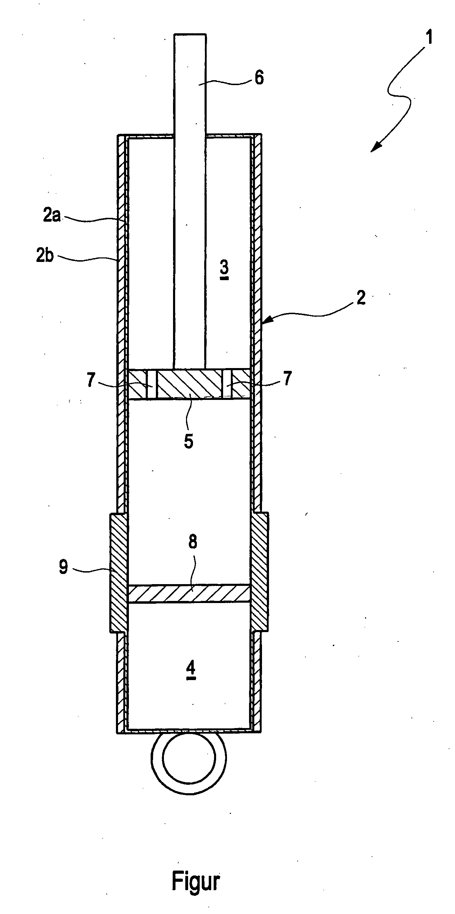

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die einzige Figur eine Schnittansicht eines erfindungsgemäßen Schwingungsdämpfers.

Gemäß der Figur hat ein Schwingungsdämpfer 1 einen Zylinder 2, bestehend aus einem zylindrischen Innenrohr 2a und einem die Mantelfläche des Innenrohrs 2a teilweise umgebenden Aussenrohr 2b. Das Innenrohr 2a bildet eine ölgefüllte Arbeitskammer 3 und eine gasgefüllte Gegendruckkammer 4, die von einem axial frei verschiebbaren Trennkolben 8 voneinander separiert sind. In der Arbeitskammer 3 ist ein Dämpfungskolben 5 mit integrierten Dämpfungsventilen 7 axial verschiebbar angeordnet, der über eine Kolbenstange 6 mit einem nicht dargestellten Aufbau eines Fahrzeugs koppelbar ist. Die Wandung des Innenrohrs 2a ist in einem radial umlaufenden und sich in axialer Richtung über einen Teil des Innenrohrs 2a erstreckenden Abschnitt 9 umfangsseitig verdickt, wobei das Aussenrohr 2b den Abschnitt 9 nicht überlagert. Das Innenrohr 2a besteht aus einem Stahlwerkstoff, während das Aussenrohr 2b aus einem Faserverbundwerkstoff besteht.

### Liste der Bezugszeichen:

- 1: Schwingungsdämpfer
- 2: Zylinder
- 2a: Innenrohr
- 2b: Aussenrohr
- 3: Arbeitskammer
- 4: Gegendruckkammer
- 5: Dämpfungskolben
- 6: Kolbenstange
- 7: Dämpfungsventil
- 8: Trennkolben
- 9: Abschnitt

## Patentansprüche

1. Schwingungsdämpfer (1) für ein Fahrzeug, umfassend einen Zylinder (2), in dem ein Dämpfungskolben (5) mit Dämpfungsventilen (7) und einer Kolbenstange (6) axial verschiebbar angeordnet ist, wobei der Zylinder (2) ein Innenrohr (2a) aus einem Metall und ein das Innenrohr (2a) zumindest teilweise umgebendes Aussenrohr (2b) aus einem Kunststoff aufweist, **dadurch gekennzeichnet, dass** das Innenrohr (2a) in einem Abschnitt (9) eine umfangsseitig dickere Wandung aufweist und das Aussenrohr (2b) in diesem Abschnitt (9) das Innenrohr (2a) zumindest nicht vollständig umgibt.

2. Schwingungsdämpfer (1) nach Anspruch 1, **dadurch gekennzeichnet, dass** die Wandung in dem Abschnitt (9) radial umlaufend dicker ist.

3. Schwingungsdämpfer (1) nach Anspruch 1 oder 2, **dadurch gekennzeichnet, dass** der dickere Abschnitt (9) mit einem Abschnitt hoher thermischer Belastung in dem Zylinder (2) und/oder hoher Luftströmung um den Zylinder (2) kongruiert.

4. Schwingungsdämpfer (1) nach einem der Ansprüche 1 bis 3, **dadurch gekennzeichnet, dass** der Kunststoff nur um eine Mantelfläche des Innenrohrs (2a) herum angeordnet ist.

5. Schwingungsdämpfer (1) nach einem der Ansprüche 1 bis 4, **dadurch gekennzeichnet, dass** der Kunststoff als ein Faserverbundwerkstoff ausgebildet ist.

6. Schwingungsdämpfer (1) nach Anspruch 5, **dadurch gekennzeichnet, dass** der Innenzylinder (2a) mit dem Faserverbundwerkstoff teilweise umwickelt ist.

7. Schwingungsdämpfer (1) nach einem der Ansprüche 1 bis 6, **dadurch gekennzeichnet, dass** das Metall als eine Eisen-Knetlegierung ausgebildet ist.

8. Fahrzeug mit mindestens einem Schwingungsdämpfer (1) nach einem der vorhergehenden Patentansprüche.

## Claims

1. Vibration damper (1) for a vehicle, comprising a cylinder (2) in which a damping piston (5) with damping valves (7) and a piston rod (6) is mounted to be axially movable, the cylinder (2) comprising an inner tube (2a) made of a metal and an outer tube (2b) made of a plastic, which at least partially surrounds the inner tube (2a), **characterised in that** the inner tube (2a) comprises a circumferentially thicker wall in one section (9) and the outer tube (2b) at least does not completely surround the inner tube (2a) in this section (9).

2. Vibration damper (1) according to claim 1, **characterised in that** the wall in the section (9) is radially thicker in the circumferential direction.

3. Vibration damper (1) according to claim 1 or 2, **characterised in that** the thicker section (9) is congruent with a section of high thermal load in the cylinder (2) and/or high air flow around the cylinder (2).

4. Vibration damper (1) according to one of claims 1 to 3, **characterised in that** the plastic is arranged only around an outer surface of the inner tube (2a).

5. Vibration damper (1) according to one of claims 1 to 4, **characterised in that** the plastic is in the form of a fibrous composite material.

6. Vibration damper (1) according to claim 5, **characterised in that** the inner cylinder (2a) is partially enveloped by the fibrous composite material.

7. Vibration damper (1) according to one of claims 1 to 6, **characterised in that** the metal is embodied as an iron forging alloy.

8. Vehicle having at least one vibration damper (1) according to one of the preceding claims.

## Revendications

1. Amortisseur de vibrations (1) pour un véhicule, comprenant un cylindre (2) dans lequel un piston d'amortissement (5) avec des soupapes d'amortissement (7) et une tige de piston (6) est disposé de façon déplaçable axialement, le cylindre (2) présentant un tube intérieur (2a) réalisé en métal, et un tube extérieur (2b) entourant au moins partiellement le tube intérieur (2a) et réalisé en matière plastique, **caractérisé en ce que** le tube intérieur (2a) présente, dans un tronçon (9), une paroi plus épaisse côté circonférence, et **en ce que** le tube extérieur (2b) entoure, dans ce tronçon (9), le tube intérieur (2a) au moins de façon non complète.

2. Amortisseur de vibrations (1) selon la revendication 1, **caractérisé en ce que** la paroi, dans le tronçon (9), est plus épaisse radialement de façon circonférentielle.

3. Amortisseur de vibrations (1) selon la revendication 1 ou 2, **caractérisé en ce que** le tronçon (9) plus épais coïncide avec un tronçon à contrainte thermique élevée dans le cylindre (2) et/ou avec un écoulement d'air important autour du cylindre (2).

4. Amortisseur de vibrations (1) selon une des revendications 1 à 3, **caractérisé en ce que** la matière plastique n'est disposée qu'autour d'une surface d'enveloppe du tube intérieur (2a).

5. Amortisseur de vibrations (1) selon une des revendications 1 à 4, **caractérisé en ce que** la matière plastique est constituée en tant que matériau composite à fibres.

6. Amortisseur de vibrations (1) selon la revendication 5, **caractérisé en ce que** le tube intérieur (2a) est entouré partiellement du matériau composite à fibres.

7. Amortisseur de vibrations (1) selon une des revendications 1 à 6, **caractérisé en ce que** le métal est constitué en tant qu'alliage corroyé de fer.

8. Véhicule avec au moins un amortisseur de vibrations (1) selon une des revendications précédentes.
